# EUROPEAN PATENT APPLICATION

(11) **EP 4 510 260 A1**
(43) Date of publication of application: **19.02.2025**
(21) Application number: 23804880.5
(22) Date of filing: 27.06.2023
(51) Int. Cl.: H01M 10/04

(54) **BATTERY PRESSURIZING DEVICE AND METHOD**

(71) Applicant: Contemporary Amperex Technology (Hong Kong) Limited, Central, Central And Western District (HK)
(72) Inventor: CHEN, Wentao, Ningde, Fujian 352100 (CN); YANG, Yule, Ningde, Fujian 352100 (CN); WANG, Youshan, Ningde, Fujian 352100 (CN)
(74) Representative: Gong, Jinping
(86) International application number: PCT/CN2023/102603
(87) International publication number: WO 2025/000213

(57) **Abstract**

Embodiments of the present application provide a battery pressing device, including: a first pressing mechanism for pressing a battery in a first direction; and a second pressing mechanism for pressing the battery in a second direction perpendicular to the first direction. With the battery pressing device of the present application, the battery can be pressed in the first direction by using the first pressing mechanism while pressing the battery in the second direction by using the second pressing mechanism, thereby reducing or suppressing the undesired deformation of the battery in the second direction and improving the flatness of the battery in the second direction.

## Description

### TECHNICAL FIELD

The present application relates to the technical field of battery manufacturing, in particular to a battery pressing device and a battery pressing method for pressing batteries.

### BACKGROUND ART

As an energy storage device, batteries are used in a wide range of fields such as mobile terminals and electric vehicles, and have become a key technical factor in the field of new energy technology.

In the manufacturing process of the battery, it is generally necessary to press the battery with a certain pressure in order to achieve a specified size of the battery and ensure the service life of the battery. However, in the case where the battery is pressed in one direction to make the battery reach a specified size, there is a problem that the surface of the battery in other directions may be deformed undesirably, making it difficult to achieve the desired flatness.

### SUMMARY OF THE INVENTION

In view of the above problems, the present application provides a battery pressing device, which can reduce or suppress the undesired deformation of the battery surface and improve the flatness of the battery appearance.

According to a first aspect, there is provided a battery pressing device, including: a first pressing mechanism for pressing a battery in a first direction; and a second pressing mechanism for pressing the battery in a second direction perpendicular to the first direction.

According to the battery pressing device of the first aspect, by making the battery pressing device include the first pressing mechanism for pressing the battery in the first direction and for pressing the battery in the second direction, the battery can be pressed in the first direction by using the first pressing mechanism while applying pressure to the battery in the second direction by using the second pressing mechanism, thereby reducing or suppressing the undesired deformation of the battery in the second direction due to the pressure in the first direction, and improving the flatness of the battery.

In some embodiments, the first pressing mechanism includes two first pressing assemblies arranged opposite to each other in the first direction across the battery, at least one first pressing assembly of the two first pressing assemblies is provided with a first direction driving mechanism, so as to press the battery through the driving of the first direction driving mechanism, and the second pressing mechanism includes two second pressing assemblies arranged opposite to each other in the second direction across the battery, at least one second pressing assembly of the two second pressing assemblies is provided with a second direction driving mechanism so as to press the battery through the driving of the second direction driving mechanism.

By adopting the aforementioned structure, the battery pressing device can use the first direction driving mechanism and the second direction driving mechanism to drive the first pressing mechanism and the second pressing mechanism in the first direction and the second direction respectively, so as to press the battery.

In some embodiments, the two second pressing assemblies of the second pressing mechanism have their respective second direction driving mechanisms, so as to move independently and press the battery in the second direction.

By adopting the aforementioned structure, compared with the structure in which only one second pressing assembly is provided with a driving mechanism and the other second pressing assembly is a fixed assembly, the two pressing assemblies of the second pressing can approach and press the battery from two side of the battery independently in the second direction, so that the alignment of the battery and the first pressing mechanism in the first direction can be realized, and therefore, it can be applied to press batteries of various specifications with different sizes in the second direction.

In some embodiments, the two second direction pressing assemblies are arranged symmetrically with respect to the center line of the battery in the first direction.

By adopting the aforementioned structure, the distances from the center line of the battery in the first direction to the two second direction pressing assemblies are equal to each other, so that for batteries with different sizes in the second direction, it is easier to realize the alignment of the battery and the first pressing mechanism in the first direction, so as to press batteries of various specifications with different sizes in the second direction, and make the stress on the two surfaces of the battery in the second direction more uniform.

In some embodiments, the battery pressing device further includes a third pressing mechanism, the third pressing mechanism has a third direction driving mechanism, and the third direction driving mechanism drives in a third direction perpendicular to the first direction and the second direction to make the third pressing mechanism press the battery in the third direction.

By adopting the aforementioned structure, the battery can be pressed in the first direction by using the first pressing mechanism while pressing the battery in the second direction and the third direction by using the second pressing mechanism and the third pressing mechanism, respectively, thereby reducing or suppressing the undesired deformation of the battery in the second direction and the third direction, and improving the flatness of the battery in multiple directions.

In some embodiments, the third direction is the direction in which the electrode terminals of the battery extend.

By adopting the aforementioned mechanism, the flatness of the battery in the direction in which the electrode terminals extend can be improved by using the third pressing mechanism.

In some embodiments, the third pressing mechanism is an electrode terminal pressing mechanism for pressing the electrode terminals of the battery.

By adopting the aforementioned structure, it can apply pressure to the electrode terminals by using the third pressing mechanism, so that when the battery is pressed in the first direction by using the first pressing mechanism, it can reduce or suppress the displacement of the electrode terminal along its extending direction due to the pressure to keep the electrode terminals flat.

In some embodiments, the third pressing mechanism includes two rows of electrode terminal pressing assemblies arranged in parallel at intervals in the second direction.

By adopting the aforementioned structure, the third pressing mechanism can be used to apply pressure to the two rows of electrode terminals of the battery at the same time, thereby reducing or suppressing the displacement of the two rows of electrode terminals of the battery along their extending direction due to pressure, and maintaining the flatness of the two rows of electrode terminals.

In some embodiments, the third pressing mechanism further includes a spacing adjusting mechanism for adjusting the spacing between the two rows of electrode terminal pressing assemblies in the second direction.

By adopting the aforementioned structure, the battery pressing device can be applied to press batteries of various specifications with different spacing between two rows of electrode terminals, which improves the compatibility of the battery pressing device.

In some embodiments, the spacing adjusting mechanism is a bidirectional adjusting lead screw.

By adopting the bidirectional adjusting lead screw as the spacing adjusting mechanism, the spacing between the two rows of electrode terminal pressing assemblies can be adjusted quickly and conveniently with a simple structure.

In some embodiments, the two rows of electrode terminal pressing assemblies respectively have a plurality of rolling members and a plurality of elastic members, and the plurality of elastic members apply elastic force to the plurality of rolling members respectively.

When the battery is pressed in the first direction by using the first pressing mechanism, generally, the length of the battery in the first direction is compressed and shortened, so that the electrode terminals are displaced in the first direction. By adopting the electrode terminal pressing assembly having a plurality of rolling members and a plurality of elastic members, when the electrode terminal is displaced in the first direction, the force of friction between the electrode terminal pressing assembly and the electrode terminal can be reduced, enabling the battery pressing device to press the battery smoothly.

In some embodiments, the first pressing mechanism and the second pressing mechanism press the battery at the same station in the battery production line.

By making the first pressing mechanism and the second pressing mechanism press the battery at the same station, it is easy to press the battery in the first direction by using the first pressing mechanism while pressing the battery in the second direction by using the second pressing mechanism, so that it can reduce or suppress the undesired deformation of the battery in the second direction and improve the flatness of the battery in the second direction.

In some embodiments, the third pressing mechanism presses the battery at the same station in the battery production line as the first pressing mechanism and the second pressing mechanism.

By making the third pressing mechanism press the battery at the same station as the first pressing mechanism and the second pressing mechanism, it is easy to press the battery in the first direction by using the first pressing mechanism while pressing the battery in the second direction and the third direction by using the second pressing mechanism and the third pressing mechanism, respectively. Therefore, the flatness of the battery in the first direction and the third direction can be simultaneously improved by using the second pressing mechanism and the third pressing mechanism.

According to a second aspect, a battery pressing method is provided to press the battery by using the battery pressing device in any of the above implementations, wherein the battery pressing method includes: pressing the battery in the first direction by using the first pressing mechanism; and pressing the battery in the second direction by using the second pressing mechanism, and wherein the battery is pressed in the first direction by using the first pressing mechanism while pressing the battery in the second direction by using the second pressing mechanism.

With the aforementioned battery pressing method, by pressing the battery in the first direction by using the first pressing mechanism while pressing the battery in the second direction by using the second pressing mechanism, it can reduce or suppress the undesired deformation of the battery in the second direction, thereby improving the flatness of the battery in the second direction.

In some embodiments, the battery pressing method further includes pressing the battery in the third direction by using the third pressing mechanism, and wherein the battery is pressed in the first direction by using the first pressing mechanism while pressing the battery in the second direction by using the second pressing mechanism and pressing the battery in the third direction by using the third pressing mechanism.

By pressing the battery in the second direction and the third direction using the second pressing mechanism and the third pressing mechanism, the undesired deformation of the battery in the second direction and the third direction can be reduced or suppressed, and the flatness of the battery in the two directions can be improved.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a schematic perspective view of a battery pressing device according to an embodiment of the present application;
Fig. 2 is a schematic top view of the battery pressing device according to the embodiment shown in Fig. 1;
Fig. 3 is a schematic perspective view of a third pressing mechanism of a battery pressing device according to another embodiment of the present application;
Fig. 4 is a schematic perspective view of a battery pressing device with a third pressing mechanism according to another embodiment of the present application, wherein, in order to clearly show the electrode terminal pressing assembly of the third pressing mechanism, and the spacing adjusting mechanism for adjusting the spacing between the electrode terminal pressing assemblies, the third direction driving mechanism of the third pressing mechanism is omitted;
Fig. 5 is a schematic side view of a portion of the third pressing mechanism in the battery pressing device shown in Fig. 4 viewed from the first direction; and
Fig. 6 is a schematic diagram showing a battery pressing device arranged at a battery pressing station on a battery production line.

It should be understood that the drawings in the present application are all schematic diagrams, and the dimension scale in the drawings is not necessarily consistent with the actual dimension scale.

### Description of reference numerals:

100 battery pressing device;
500 battery, 501 electrode terminal;
1 first pressing mechanism, 11a, 11b first pressing assembly, 11a1 first direction driving mechanism;
2 second pressing mechanism, 21, 21 second pressing assembly, 21a second direction driving mechanism;
3 third pressing mechanism, 31 third direction driving mechanism, 32 electrode terminal pressing assembly, 33 spacing adjusting mechanism, 32a rolling member, 32b elastic member;
X first direction, Y second direction, Z third direction, L center line;
A last station, B battery pressing station, C next station.

### DETAILED DESCRIPTION

The implementations of the present application are to be further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it is to be noted that, unless otherwise stated, "a plurality of" means more than two; the term "direction" includes two directions opposite to each other in one dimension of three dimensional space. In addition, the terms "first", "second" and "third" are used for descriptive purposes only, and cannot be construed as indicating or implying relative importance. "Vertical" is not strictly vertical, but within the allowable range of error.

The position words appearing in the following description are the directions shown in the drawings, and do not limit the specific structure of the present application. In the description of the present application, it is also to be noted that, unless otherwise expressly specified and defined, the terms "mounting" and "arrangement" shall be understood in a broad sense, for example, either as fixed arrangement, as detachable arrangement, or as integral arrangement; as direct arrangement, or as indirect arrangement through an intermediate medium. For those of ordinary skill in the art, the specific meanings of the above terms in the present application may be understood according to specific circumstances.

At present, with the continuous development of the new energy industry, the application fields of batteries continue to expand, and the quality requirements for batteries are also continuously increased.

During the production process of batteries, it is usually necessary to press the batteries in order to process the batteries to the specified size. When the battery is pressed in one direction, the battery will not only be compressed and deformed in the one direction, but will also be deformed in another direction perpendicular to the direction. As a result, the two surfaces in the another direction become uneven, making it difficult to achieve the desired flatness.

In order to solve the problem of insufficient flatness of the battery surface, the present application proposes a battery pressing device, wherein by arranging pressing mechanisms in at least two different directions of the battery, when the battery pressing device presses the battery in one direction, the deformation of the battery in another direction is reduced or suppressed, thereby improving the flatness of the battery.

The battery pressing device of the present application can be well adapted to pressing a battery module composed of a plurality of battery cells in the battery manufacturing process, but the present application is not limited to the pressing treatment of the battery module, it can also be applied to press battery cells. Moreover, the battery pressing device of the present application can be used in the manufacture of power batteries for electric vehicles, batteries used in mobile terminal equipment, and other various known battery modules, battery cells, and the like.

Hereinafter, a battery pressing device 100 according to an embodiment of the present application will be described with reference to the drawings.

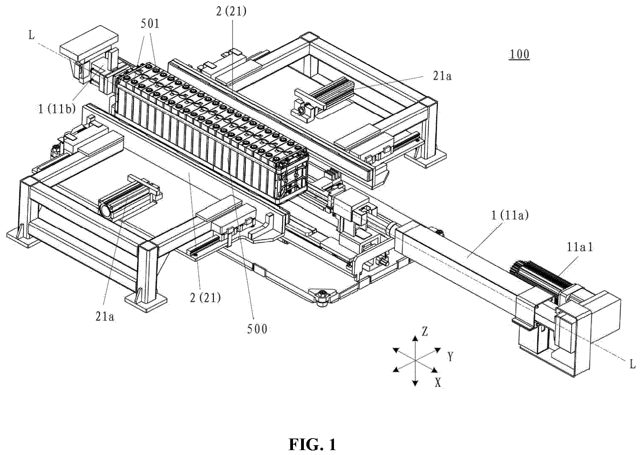

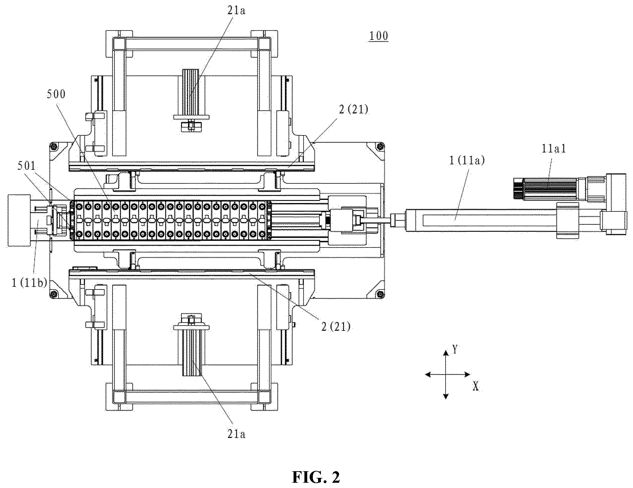

As shown in Figs. 1 and 2, in order to process a battery 500 into the specified size, the battery 500 is pressed by using the battery pressing device 100. Fig. 1 is a schematic perspective view showing the battery pressing device 100 according to some embodiments of the present application, and Fig. 2 is a schematic top view showing the battery pressing device 100 in Fig. 1.

As shown in Figs. 1 and 2, the battery pressing device 100 includes a first pressing mechanism 1 and a second pressing mechanism 2. The first pressing mechanism 1 presses the battery 500 in a first direction X, and the second pressing mechanism presses the battery 500 in a second direction Y. The first direction X and the second direction Y are perpendicular to each other.

The battery 500 shown in Figs. 1 and 2 is a battery module including a plurality of battery cells arranged along the first direction X, each battery cell having two electrode terminals 501. However, it should be understood that the battery 500 described here is not limited to a battery module, but may include battery cells or battery packs.

Moreover, the first direction X mentioned above refers to a direction in one dimension in the three-dimensional structure of the battery 500, the second direction Y refers to a direction in another dimension in the three-dimensional structure of the battery 500, and the first direction X and the second direction Y are perpendicular to each other. In the example shown in Figs. 1 and 2, the size of the battery 500 in the first direction X is larger than the size of the battery 500 in the second direction Y. However, the present application is not limited to the example shown in Figs. 1 and 2. For example, the size of the battery 500 in the first direction X may also be smaller than the size of the battery 500 in the second direction, or the sizes of the battery 500 in the first direction X and the second direction Y may be equal to each other.

When the battery 500 is under pressure in one of the first direction X and the second direction Y (such as the first direction X), it will not only be compressed and deformed in the one direction, but also tend to expand and deform to both sides in the other direction (such as the second direction Y).

When the battery 500 is compressed and deformed by the pressure exerted by the first pressing mechanism 1 in the first direction X, the battery 500 tends to expand and deform in the second direction Y perpendicular to the first direction X, and therefore, the two surfaces of the battery 500 in the second direction tend to become uneven due to the deformation. However, by arranging the first pressing mechanism 1 and the second pressing mechanism 2 in the battery pressing device 100, the battery 500 can be pressed in the first direction X by using the first pressing mechanism 1 while pressing the battery 500 in the second direction Y by using the second pressing mechanism 2, so that the undesired deformation of the battery 500 in the second direction Y can be reduced or suppressed by using the second pressing mechanism 2, and the surface flatness of the battery 500 in the second direction Y can be improved.

According to some embodiments of the present application, the first pressing mechanism 1 includes two first pressing assemblies 11a, 11b arranged opposite to each other in the first direction X across the battery 500. At least one first pressing assembly 11a of the two first pressing assemblies 11a, 11b is provided with a first direction driving mechanism 11a1; the second pressing mechanism 2 includes two second pressing assemblies 21, 21 arranged opposite to each other in the second direction Y across the battery 500. At least one second pressing assembly 21 of the two second pressing assemblies 21, 21 is provided with a second direction driving mechanism 21a. By driving the first pressing assembly 11a by using the first direction driving mechanism 11a1, the first pressing mechanism 1 can press the battery 500 in the first direction X, and by driving the second pressing assembly 21 by using the second direction driving mechanism 21a, the second pressing mechanism 21 can press the battery 500 in the second direction Y.

Figs. 1 and 2 show an example in which one first pressing assembly 11a of the two first pressing assemblies 11a and 11b is a movable assembly with the first direction driving mechanism 11a1, and the other first pressing assembly 11b is a fixed assembly without a first direction driving mechanism. However, there is no problem if the two first pressing assemblies 11a, 11b are both movable assemblies having a first direction driving mechanism.

In addition, in Figs. 1 and 2, an example in which two second pressing assemblies 21 each have the second direction driving mechanism 21a is shown. However, it is also possible to make one of the two second pressing assemblies 21 have the first direction driving mechanism, while the other does not have the second direction driving mechanism.

As an example of the first direction driving mechanism 11a1, a servo motor can be used. By adopting a servo motor as the first direction driving mechanism 11a1, the rotation of the first direction driving mechanism 11a1 can be controlled, so that the movement stroke of the first pressing assembly 11a of the first pressing mechanism 1 can be easily controlled according to the size of the battery 500 in the first direction X, so as to be suitable for pressing batteries 500 with different sizes in the first direction X. In addition, a cylinder can be used as an example of the second direction driving mechanism 21. However, the present application is not limited thereto. For example, a cylinder may be used as the first direction driving mechanism and a servo motor may be used as the second direction driving mechanism, or both the first direction driving mechanism and the second direction driving mechanism may adopt a servo motor or cylinder.

The battery is pressed by using the first direction driving mechanism 11a1 and the second direction driving mechanism 21a to drive the first pressing assembly 11a of the first pressing mechanism 1 and the second pressing assembly 21 of the second pressing mechanism 2 in the first direction and the second direction, respectively.

According to some embodiments of the present application, as shown in Figs. 1 and 2, the two second pressing assemblies 21 of the second pressing mechanism 2 may have their respective second direction driving mechanisms 21a. The second direction driving mechanisms 21a can drive their respective second pressing assemblies 21, so that the two second pressing assemblies 21 move independently and press the battery 500 opposite to each other in the second direction.

**In** the case where only one second pressing assembly 21 of the two second pressing assemblies 21 is provided with the second direction driving mechanism 21a, and the other second pressing assembly 21 is not provided with the second direction driving mechanism, only one second pressing assembly 21 having the second direction driving mechanism 21a can be moved, and the other second pressing assembly 21 without the second direction driving mechanism cannot be moved. Therefore, such a second pressing device 2 can only be applied to press a battery 500 with the specific size, and when the size and specification of the battery 500 change, it is difficult to make the battery 500 and the first pressing mechanism 1 keep aligned in the first pressing direction X.

However, in some embodiments, by making the two second pressing assemblies 21 move independently and press the two sides of the battery 500 in the second direction Y, the battery 500 and the first pressing mechanism 1 can be aligned in the first direction X, and therefore, it can be applied to press batteries 500 of various specifications with different sizes in the second direction Y.

According to some embodiments of the present application, as clearly shown in Fig. 2, in the second direction Y, the two second pressing assemblies 21 may be symmetrically arranged with respect to the center line L of the battery 500 in the first direction X.

By arranging the two second pressing assemblies 21 symmetrically with respect to the center line L of the battery 500 in the first direction X, the distances of the two second pressing assemblies 21 from the center line L are equal to each other, so that for batteries 500 with different sizes in the second direction Y, it is easier to realize the alignment of the battery 500 with the first pressing mechanism 1 in the first direction X, so as to adapt to pressing batteries 500 of various specifications with different sizes in the second direction Y, and make the stress on the two surfaces of the battery 500 in the second direction Y more uniform.

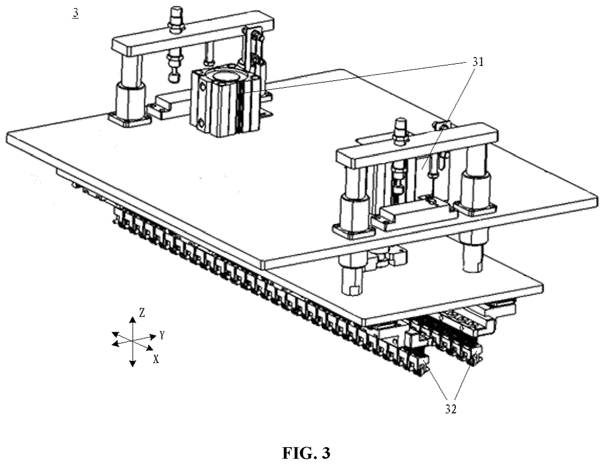

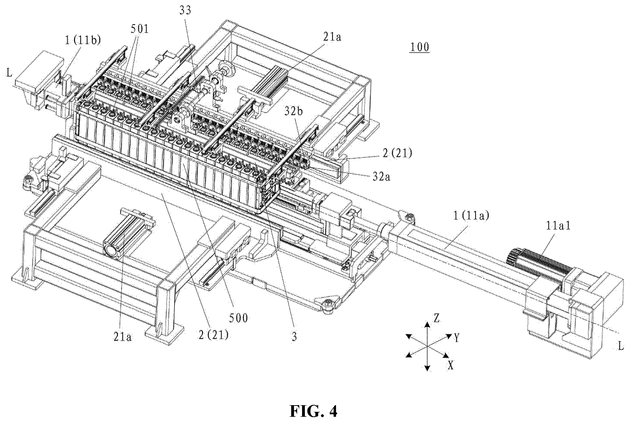

According to some embodiments of the present application, the battery pressing device 100 may further include a third pressing mechanism 3 as shown in Fig. 3, and the third pressing mechanism 3 has a third direction driving mechanism 31. Fig. 4 is a schematic perspective view showing a battery pressing device 100 with a third pressing mechanism 3, wherein, in order to clearly show how the third pressing mechanism 3 presses the battery 500 in a third direction Z, the representation of the third direction driving mechanism 31 is omitted. **In** combination with Figs. 3 and 4, it can be seen that the third direction driving mechanism 31 drives the third pressing mechanism 3 in the third direction Z perpendicular to the first direction X and the second direction Y to press the battery 500.

Like the first direction driving mechanism 11a1 and the second direction driving mechanism 21a, as a non-limiting example, the third direction driving mechanism 31 may also be a servo motor or cylinder.

**In** the example shown in Fig. 4, the first direction X corresponds to the length direction of the battery 500, the second direction Y corresponds to the width direction of the battery 500, and the third direction Z corresponds to the height direction of the battery 500 (a direction perpendicular to the length direction and the width direction), and the dimension of the battery 500 in the first direction X is longer than the dimensions in the second direction Y and the third direction Z. It should be understood, however, that the position relationship describe above is only an example of the present application and if the position relationship and size relationship among the first direction X, the second direction Y, and the third direction Z are changed, it can also be applicable to the present application.

By further providing the third pressing mechanism 3 in the battery pressing device 100, the battery 500 can be pressed in the first direction X by using the first pressing mechanism 1 while applying pressure to the battery 500 in the second direction and/or the third direction Z by using the second pressing mechanism 2 and/or the third pressing mechanism 3, thereby reducing or suppressing the undesired deformation of the battery 500 in the second direction Y and/or the third direction Z, and improving the flatness of the battery 500 in multiple directions.

According to some embodiments of the present application, as shown in Fig. 4, the third direction Z may be the direction in which the electrode terminal 501 of the battery 500 extends.

According to such a structure, by making the third pressing mechanism 3 to press the battery 500 in the direction in which the electrode terminals 501 extend (such as the third direction Z in Fig. 4), the flatness of the battery 500 in the direction in which the electrode terminal 501 extends can be improved by using the third pressing mechanism 3.

According to some embodiments of the present application, as shown in Figs. 3 and 4, the third pressing mechanism 3 may be an electrode terminal pressing mechanism for pressing the electrode terminal 501 of the battery 500.

In the case where the third pressing mechanism 3 is an electrode terminal pressing mechanism, the third pressing mechanism 3 presses the electrode terminals 501 of the battery 500 in the direction in which the electrode terminals 501 of the battery 500 extend (that is, the third direction Z in Fig. 4). The pressure applied by the third pressing mechanism 3 to the electrode terminal 501 does not need to deform the electrode terminal 501, but only needs to be able to press the electrode terminal 501 along its extending direction (that is, the third direction Z in Fig. 4) so as to keep the electrode terminal 501 from being displaced in the third direction.

By making the third pressing mechanism 3 an electrode terminal pressing mechanism for pressing the electrode terminal 501 of the battery 500, the electrode terminal 501 can be pressed by using the third pressing mechanism 3, so that when the battery 500 is pressed in the first direction X and/or the second direction Y by using the first pressing mechanism 1 and/or the second pressing mechanism 2, it can reduce or suppress the displacement of the electrode terminals 501 along its extension direction due to the pressure from the direction perpendicular to the extension direction, thereby reducing or suppressing the unevenness of the electrode terminals 501 on the surface of the battery 500 and improving the flatness of arrangement of the electrode terminals 501.

According to some embodiments of the present application, as shown in Figs. 3 to 5, the third pressing mechanism 3 may include two rows of electrode terminal pressing assemblies 32 arranged in parallel at intervals in the second direction Y.

As shown in Figs. 1, 2 and 4, generally, two rows of electrode terminals 501 are arranged in parallel in the battery 500. Therefore, in the case of pressing such a battery 500 having two rows of electrode terminals 501, by using the third pressing mechanism 3 having two rows of electrode terminal pressing assemblies 32, when pressing the battery 500 in the first direction X and/or the second direction Y by using the first pressing mechanism 1 and/or the second pressing mechanism 2, the displacement of the two rows of electrode terminals 501 of the battery 500 in the third direction Z (the extending direction of the electrode terminals 501) can be reduced and suppressed by using the third pressing mechanism 3, so that for the battery 500 having two rows of electrode terminals 501, the unevenness of the electrode terminals 501 on the surface of the battery 500 can be effectively reduced or suppressed.

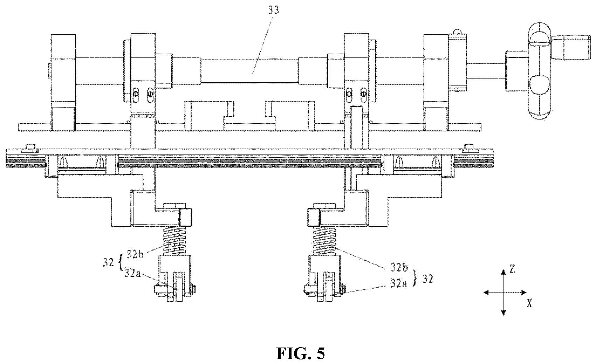

According to some embodiments of the present application, as shown in Figs. 4 and 5, the third pressing mechanism 3 further includes a spacing adjusting mechanism 33 for adjusting the spacing between the two rows of electrode terminal pressing assemblies 32 in the second direction Y.

By arranging the spacing adjusting mechanism 33 in the third pressing mechanism 3, the spacing between the two rows of electrode terminal pressing assemblies 32 can be adjusted, so that the third pressing mechanism 3 with such a structure is suitable for pressing batteries 500 of various specifications with different spacing between the two rows of electrode terminals 501.

According to some embodiments of the present application, as shown in Figs. 4 and 5, the spacing adjusting mechanism 33 may be a bidirectional adjusting lead screw.

By adopting the bidirectional adjusting lead screw as the spacing adjusting mechanism 33 of the third pressing mechanism 3, the spacing between the two rows of electrode terminal pressing assemblies can be adjusted quickly and conveniently with a simple structure.

According to some embodiments of the present application, as shown in Figs. 3 and 4, the two rows of electrode terminal pressing assemblies 32 respectively have a plurality of rolling members 32a and a plurality of elastic members 32b, and the plurality of elastic members 32b apply elastic force to the plurality of rolling members 32a, respectively.

The rolling member 32a can simply have a structure capable of rolling, for example, a roller or a roll ball. The elastic member 32b is a member capable of providing elastic force, such as a spring or a member made of an elastic material.

When the battery 500 is pressed in the first direction X by using the first pressing mechanism 1, generally, the length of the battery 500 in the first direction X is compressed and shortened, so that the electrode terminals 501 are displaced in the first direction X. By adopting the electrode terminal pressing assembly 32 having a plurality of rolling members 32a and a plurality of elastic members 32b, when the electrode terminal 501 is displaced in the first direction X, the force of friction between the electrode terminal pressing assembly 32 and the electrode terminal 501 can be reduced, so that the battery 500 can be pressed smoothly.

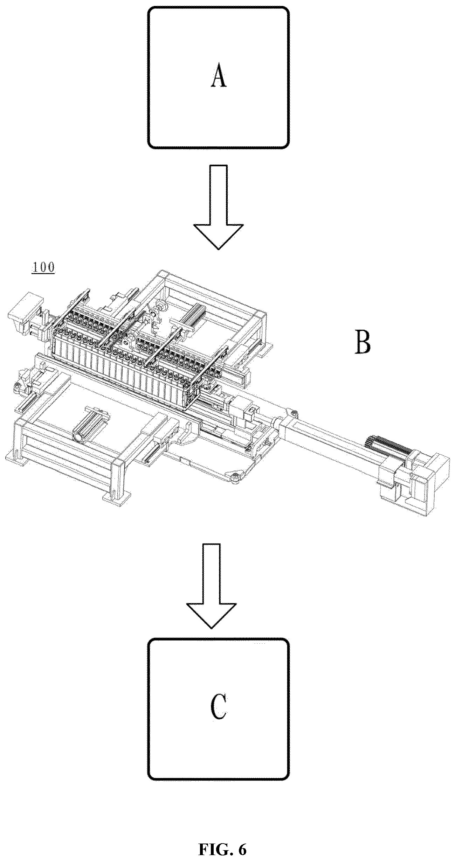

According to some embodiments of the present application, as shown in Fig. 6, the aforementioned first pressing mechanism 1 and second pressing mechanism 2 can press the battery 500 at the same station in the battery production line.

In the battery production line shown in Fig. 6, the first pressing mechanism 1 and the second pressing mechanism 2 are both arranged at a battery pressing station B. The battery 500 conveyed from the last station A upstream of the battery pressing station B can be pressed by the first pressing mechanism 1 and the second pressing mechanism 2 of the battery pressing device 100 at the battery pressing station B, and is then transported from the battery pressing station B to the next station C downstream of the battery pressing station B for subsequent processing.

By making the first pressing mechanism 1 press the battery 500 at the same station as the second pressing mechanism 2, it is easy to press the battery 500 in the first direction X by using the first pressing mechanism 1 while pressing the battery 500 in the second direction Y by using the second pressing mechanism 2. Therefore, the effect of improving the flatness of the surface of the battery 500 in the second direction Y can be achieved.

According to some embodiments of the present application, as shown in Fig. 6, the third pressing mechanism 3 can press the battery 500 at the same station in the battery production line as the first pressing mechanism 1 and second pressing mechanism 2.

In the battery production line shown in Fig. 6, like the first pressing mechanism 1 and the second pressing mechanism 2, the third pressing mechanism 3 is also arranged at the battery pressing station B. Therefore, the battery 500 conveyed from the last station A upstream of the battery pressing station B can be pressed by the first pressing mechanism 1, the second pressing mechanism 2 and the third pressing mechanism 3 of the battery pressing device 100 at the battery pressing station B, and is then transported from the battery pressing station B to the next station C downstream of the battery pressing station B for subsequent processing.

By making the third pressing mechanism 3 press the battery 500 at the same station as the first pressing mechanism 1 and the second pressing mechanism 2, it is easy to press the battery 500 in the first direction X by using the first pressing mechanism 1 while pressing the battery 500 in the second direction Y and the third direction Z by using the second pressing mechanism 2 and the third pressing mechanism 3, respectively, thereby achieving the effect of improving the flatness of the surface of the battery 500 in the second direction Y and the third direction Z.

Additionally, according to some embodiments of the present application, a battery pressing method is provided to press the battery 500 by using the battery pressing device 100 in any of the above implementations, wherein the battery pressing method includes: pressing the battery 500 in the first direction X by using the first pressing mechanism 1; and pressing the battery 500 in the second direction Y by using the second pressing mechanism 2, and wherein the battery 500 is pressed in the first direction X by using the first pressing mechanism 1 while pressing the battery 500 in the second direction Y by using the second pressing mechanism 2.

By pressing the battery 500 in the first direction X by using the first pressing mechanism 1 while pressing the battery 500 in the second direction Y by using the second pressing mechanism 2, it can reduce or suppress the undesired deformation of the battery 500 in the second direction Y due to the pressure in the first direction X, thereby improving the flatness of the battery.

According to some embodiments of the present application, the above mentioned battery pressing method further includes pressing the battery 500 in the third direction Z by using the third pressing mechanism 3, and wherein the battery 500 is pressed in the first direction X by using the first pressing mechanism 1 while pressing the battery 500 in the second direction Y by using the second pressing mechanism 2 and pressing the battery 500 in the third direction Z by using the third pressing mechanism 3.

By pressing the battery 500 in the first direction X by using the first pressing mechanism 1 while pressing the battery 500 in the second direction Y by using the second pressing mechanism 2 and pressing the battery 500 in the third direction Z by using the third pressing mechanism 3, it can reduce or suppress the undesired deformation of the battery 500 in the two directions, that is the second direction Y and the third direction Z, and improve the flatness of the battery.

According to some embodiments of the present application, referring to Figs. 3 to 5, the battery pressing device 100 includes the first pressing mechanism 1, the second pressing mechanism 2 and the third pressing mechanism 3. As shown in Fig. 6, the first pressing mechanism 1, the second pressing mechanism 2 and the third pressing mechanism 3 are located at the same station, that is, the battery pressing station B on the battery production line. As shown in Fig. 4, the first pressing mechanism 1 includes two first pressing assemblies 11a, 11b arranged opposite to each other in the first direction X across the battery 500, and one first pressing assemblies 11a in the two first pressing assemblies 11a, 11b is provided with a first direction driving mechanism 11a1, so as to be able to drive the one first pressing component 11a to push and press the battery 500 in the first direction X, and the first direction driving mechanism 11a1 is a servo motor; the second pressing mechanism 2 includes two second pressing assemblies 21, 21 arranged opposite to each other in the second direction Y across the battery 500, the two second pressing assemblies 21, 21 are arranged symmetrically with respect to the centerline L of the battery 500 in the first direction X, and the two second pressing assemblies 21, 21 are respectively provided with second direction driving mechanisms 21a, 21a, so as to drive the second pressing assemblies 21, 21 independently to push and press the battery 500 from either side in the second direction Y. Referring to Figs. 3 to 5, the third pressing mechanism 3 is an electrode terminal pressing mechanism including a third direction driving mechanism 31 and two rows of electrode terminal pressing assemblies 32, and the two rows of electrode terminal pressing assemblies 32 respectively have a plurality of rolling member 32a and a plurality of elastic members 32b. The third direction driving mechanism 31 drives the two rows of electrode terminal pressing components 32 in the third direction Y to press the electrode terminals 501 of the battery 500. The third direction Z is the direction in which the electrode terminal 501 of the battery 500 extends, the first direction X and the second direction Y are respectively perpendicular to the third direction Z, the first direction X and the second direction Y are perpendicular to each other, and the size of the battery 500 in the first direction X is larger than the size of the battery 500 in the second direction Y.

According to some embodiments of the present application, as a battery pressing method for pressing the battery 500 by using the aforementioned battery pressing device 100, it involves pressing the battery in the first direction X by using the first pressing mechanism 1 while pressing the battery 500 in the second direction Y by using the second pressing mechanism 2 and pressing the electrode terminals 501 of the battery 500 in the third direction Z by using the third pressing mechanism 3.

Although the present application has been described with reference to the preferred embodiments, various improvements can be made thereto and components thereof can be replaced with equivalents without departing from the scope of the present application. **In** particular, the technical features mentioned in the various examples can be combined in any manner as long as there is no structural conflict. The present application is not limited to the specific embodiments disclosed herein, but rather includes all technical solutions falling within the scope of the claims.

## Claims

1. A battery pressing device, comprising: a first pressing mechanism for pressing a battery in a first direction; and a second pressing mechanism for pressing the battery in a second direction perpendicular to the first direction.

2. The battery pressing device according to claim 1, wherein the first pressing mechanism comprises two first pressing assemblies arranged opposite to each other in the first direction across the battery, at least one first pressing assembly of the two first pressing assemblies is provided with a first direction driving mechanism, so as to press the battery through the driving of the first direction driving mechanism,
the second pressing mechanism comprises two second pressing assemblies arranged opposite to each other in the second direction across the battery, at least one second pressing assembly of the two second pressing assemblies is provided with a second direction driving mechanism, so as to press the battery through the driving of the second direction driving mechanism.

3. The battery pressing device according to claim 1 or 2, wherein the two second pressing assemblies of the second pressing mechanism have their respective second direction driving mechanisms so as to move independently and press the battery in the second direction.

4. The battery pressing device according to claim 3, wherein the two second pressing assemblies are arranged symmetrically with respect to the center line of the battery in the first direction.

5. The battery pressing device according to any one of claims 1 to 4, wherein the battery pressing device further comprises a third pressing mechanism having a third direction driving mechanism, and the third direction driving mechanism drives in a third direction perpendicular to the first direction and the second direction, so that the third pressing mechanism presses the battery in the third direction.

6. The battery pressing device according to claim 5, wherein the third direction is a direction in which the electrode terminals of the battery extend.

7. The battery pressing device according to claim 6, wherein the third pressing mechanism is an electrode terminal pressing mechanism for pressing the electrode terminals of the battery.

8. The battery pressing device according to claim 7, wherein the third pressing mechanism comprises two rows of electrode terminal pressing assemblies arranged in parallel at intervals in the second direction.

9. The battery pressing device according to claim 8, wherein the third pressing mechanism further comprises a spacing adjusting mechanism for adjusting the spacing between the two rows of electrode terminal pressing assemblies in the second direction.

10. The battery pressing device according to claim 9, wherein the spacing adjusting mechanism is a bidirectional adjusting lead screw.

11. The battery pressing device according to any one of claims 8 to 10, wherein the two rows of electrode terminal pressing assemblies respectively have a plurality of rolling members and a plurality of elastic members, and the plurality of elastic members respectively apply elastic force to the plurality of rolling members.

12. The battery pressing device according to any one of claims 1 to 11, wherein the first pressing mechanism and the second pressing mechanism press the battery at the same station in a battery production line.

13. The battery pressing device according to any one of claims 5 to 11, wherein the third pressing mechanism presses the battery at the same station in the battery production line as the first pressing mechanism and the second pressing mechanism.

14. A battery pressing method for pressing a battery by using the battery pressing device according to any one of claims 1 to 13, wherein the battery pressing method comprises: pressing the battery in the first direction by using the first pressing mechanism; and pressing the battery in the second direction by using the second pressing mechanism, and wherein the battery is pressed in the first direction by using the first pressing mechanism while pressing the battery in the second direction by using the second pressing mechanism.

15. The battery pressing method according to claim 14, wherein the battery pressing method further comprises: pressing the battery in the third direction by using the third pressing mechanism, and wherein the battery is pressed in the first direction by using the first pressing mechanism while pressing the battery in the second direction by using the second pressing mechanism and pressing the battery in the third direction by using the third pressing mechanism.
